**Europäisches Patentamt**

**European Patent Office**

**Office européen des brevets**

(19)

(11) **EP 0 382 057 B2**

(12) **NEUE EUROPÄISCHE PATENTSCHRIFT**

(45) Veröffentlichungstag und Bekanntmachung des Hinweises auf die Entscheidung über den Einspruch:
**07.05.1997 Patentblatt 1997/19**

(51) Int. Cl.⁶: **B60T 8/18**

(45) Hinweis auf die Patenterteilung:
**28.04.1993 Patentblatt 1993/17**

(21) Anmeldenummer: **90101795.4**

(22) Anmeldetag: **30.01.1990**

(54) **Automatisch lastabhängiger Bremskraftregler**

Automatically load-dependant brake force control

Contrôle automatique du freinage en fonction de la charge

(84) Benannte Vertragsstaaten:
**DE GB IT**

(30) Priorität: **06.02.1989 DE 3903457**

(43) Veröffentlichungstag der Anmeldung:
**16.08.1990 Patentblatt 1990/33**

(73) Patentinhaber: **GRAU GMBH**
**D-69123 Heidelberg (DE)**

(72) Erfinder: **Schäfer, Günter**
**D-6900 Heidelberg (DE)**

(74) Vertreter: **Rehberg, Elmar, Dipl.-Ing.**
**Patentanwalt**
**Postfach 31 62**
**37021 Göttingen (DE)**

(56) Entgegenhaltungen:
EP-A- 0 058 413
DE-A- 1 946 446
DE-A- 3 216 407
DE-C- 1 231 584
EP-A- 0 379 386
DE-A- 2 917 073
DE-A- 3 243 654

EP 0 382 057 B2

Printed by Rank Xerox (UK) Business Services
2.14.3/3.4

## Beschreibung

Die Erfindung bezieht sich auf einen automatisch lastabhängigen Bremskraftregler für druckmittelbetätigte Bremsanlagen in pneumatisch oder hydraulisch gefederten Fahrzeugen, mit einem vom lastabhängigen Druck gesteuerten und sich auf einer Regelfeder, die in ihrer Vorspannung einstellbar ist, abstützenden Stellkolben, der ein die Steuerstange des Regelteils des Bremswaftreglers steuerndes Verstellglied mit einer schrägen Gleitfläche aufweist.

Ein derartiger automatisch lastabhängiger Bremskraftregler ist aus der EP-A-0058413 bekannt. Auf dem Stellkolben ist ein Verstellglied mit einer schrägen Gleitfläche angeordnet, über die eine Steuerstange des Regelteils des Bremskraftreglers in verschiedener Höhenlage je nach Beladungszustand eingestellt wird. Der Stellkolben stützt sich entgegen dem auf ihm wirksam werdenden Steuerdruck auf einer Regelfeder ab, die in ihrer Vorspannung einstellbar ist. Durch Verkürzen der Windungszahl dieser Regelfeder kann eine Anpassung im C-Wert der Regelfeder erfolgen. Es ist eine Stellschraube vorgesehen, über deren Verstellung der Leerbremsdruck, also der ausgesteuerte Bremsdruck, bei einem nicht beladenen Fahrzeug einstellbar ist. Mit dieser Einstellung wird aber zwangsweise auch der Weg, den der Stellkolben mit seiner Gleitfläche zurücklegen kann, eingestellt, wodurch sich in der Folge wiederum die Anpassung des C-Werts der Regelfeder als erforderlich erweist.

Ein weiterer ähnlicher automatisch lastabhängiger Bremskraftregler ist durch die WABCO-Druckschrift 475 700 908 3 von 1978 bekannt, wobei eine Stelleinrichtung zur Einstellung des Übersetzungsverhältnisses zwischen Steuerdruck und Bremsdruck aus zwei gehäuseseitig gelagerten Hebeln vorgesehen ist, zwischen denen eine Rolle oder ein Gleitstein in Richtung der Hebel verstellbar bzw. verschiebbar angeordnet ist. Zur Verstellung der Stelleinrichtung dient auch hier ein Stellkolben, der auch für zweikreisige Ansteuerung in zwei Teilkolben unterteilt sein kann. Der Stellkolben bzw. die Stellkolben sind von dem Fluiddruck der Federung beaufschlagt, die als pneumatische oder auch als hydraulische Federung ausgebildet sein kann. Entgegengesetzt zu dieser von dem Fluiddruck einwirkenden Kraft ist die Stellungeinrichtung bzw. die Rolle oder der Gleitstein auf einer Federeinrichtung abgestützt, die aus einer Feder besteht, welche eine relativ große Länge aufweist und als Druckfeder ausgebildet ist. In diese Feder ist auch hier ein auf verschiedener axialer Länge der Feder fixierbares Federauflagereinsetzbar, welches nach seinem Einsatz die Anzahl der Federwindungen, die für eine Federbewegung zur Verfügung stehen, festlegt. Es wird also mit diesem verstellbaren Auflager die Federkonstante der Druckfeder verändert bzw. eingestellt. Das Federauflager kann dann mit Hilfe einer konterbaren Stellschraube noch so eingestellt und abgestützt werden, daß beispielsweise für das unbeladene Fahrzeug eine eindeutige Zuordnung des ausgesteuerten Bremsdruck zu dem eingesteuerten Steuerdruck am Bremskraftregler fixiert ist. Erst wenn der über den Steuerkolben einwirkende Fluiddruck eine größere Kraft erzeugt als es der Vorspannung des verbleibenden Federteils der Federeinrichtung entspricht, wird das Übersetzungsverhältnis mit der Beladung des Fahrzeugs verändert. Für die Festlegung des Bremsdrucks bei unbeladenem Fahrzeug ist zusätzlich eine zweite konterbare Stellschraube vorgesehen, die an dem Stellkolben anliegt.

Mit derartigen Einrichtung kann zwar die Federkonstante der Feder verstellt und damit eingestellt werden; es ist jedoch von Nachteil, daß mit einer solchen Einrichtung auch die Veränderung bzw. Einstellung des Federwegs zwangsläufig erfolgt. Aus diesem Grunde ist bei Einstellung des Leerbremsdrucks die Anpassung der Federkonstanten erforderlich. Um allen Anwendungsfällen gerecht zu werden, werden deshalb zwei oder sogar drei Federn mit diesem bekannten Bremskraftregler ausgeliefert, die sich hinsichtlich ihrer Federkonstanten wesentlich unterscheiden, jedoch etwa gleiche Federlänge aufweisen. Damit überläßt man es dem Anwender, die für den jeweiligen Anwendungsfall geeignete Feder auszusuchen und die entsprechende Einstellung vorzunehmen, was eine erhebliche Erfahrung voraussetzt. Außerdem ist nachteilig, daß Kennwerte aus zahlreichen Nomogrammen ermittelt, übernommen und berücksichtigt werden müssen. Hieraus verbleibt beim Anwender immer eine gewisse Unsicherheit, ob er die richtige Feder eingesetzt und in der zutreffenden Weise die Federkonstante angepaßt hat.

Die DE-AS 15 55 554 zeigt einen automatisch lastabhängigen Bremskraftregler, der ähnlich aufgebaut ist, jedoch nur für einkreisige Ansteuerung beschrieben ist. Die Rolle zwischen den beiden Heben ist über eine gesonderte Stelleinrichtung verstellbar, um einen gewünschten Leerbremsdruck relativ zu dem Steuerdruck bei unbeladenem Fahrzeug einstellen zu können. Die Regelfeder ist zwar in ihrer Vorspannung einstellbar, jedoch kann die Federkonstante an einer solchen Regelfeder hier nicht variiert werden. Wird dieser bekannte Bremskraftregler für hinsichtlich der Aufgabenstellung abweichende Anwendungsfälle eingesetzt, dann muß in der Regel die einzige Regelfeder gegen eine andere Regelfeder mit anderer Federkonstanten ausgetauscht werden. Auch dies ist umständlich und erfordert für die verschiedenen Anwendungsfälle eine vergleichsweise große Anzahl verschiedener Regelfedern.

Die DE-PS 32 41 130 zeigt einen automatisch lastabhängigen Bremskraftregler der sich ebenfalls innerhalb der vom Stand der Technik aufgezeigten Entwicklungsrichtung hält, also den Weg über eine Anpassung und Veränderung der Federkonstanten der Regelfeder geht. Es wird hier eine aus mehreren Federn bestehende Federeinrichtung geschaffen, wobei die Regelfedern in Reihe hintereinandergeschaltet sind. Außerdem ist ein gehäuseseitiges Federauflager vorgesehen und die Ragelfedern über einen Waagebalken aneinander abgestützt. Der Waagebalken weist zur Veränderung seines Übersetzungsverhältnisses und damit zur Veränderung der Federkonstanten der Federeinrichtung eine gehäuseseitig ver- und feststellbare Drehachse auf. Diese Möglichkeit vermeidet zwar das Auswechseln verschiedener Regelfedern gegeneinander, ist aber hinsichtlich der Ausbildung und Anordnung der Federeinrichtung kompliziert und erfordert darüberhinaus auch entsprechende Einstellungen.

Der Erfindung liegt die Aufgabe zugrunde, einen Bremskraftregler der eingangs beschriebenen Art zu schaffen, der in einfacherer Weise universell einsetzbar und einstellbar ist, und zwar für Fahrzeuge mit entweder verschiedener Balgdruckdifferenz zwischen Leerlast und Vollast und für verschieden oder auch gleich hoch ausgesteuerte Bremsdrücke bei Leerlast oder bei gleicher Balgdruckdifferenz und verschieden hohen Balgdrücken bei Leerlast.

Erfindungsgemäß wird dies dadurch erreicht, daß die Schräglage der schrägen Gleitfläche des Verstellglieds über eine aufdem Stellkolben vorgesehene Stelleinrichtung im Sinne einer Schwenkbewegung um eine durch die Vollaststellung festgelegte Achse veränderlich einstellbar ist, wobei eine Stellschraube mit ihrer Achse parallel zur Achse des Stellkolbens und außerhalb der sich im Stellkolben abstützenden Regelfeder angeordnet ist. Die vorliegende Erfindung löst sich von der im Stand der Technik vorgezeigten Entwicklungsrichtung, für die Einstellung des Leerbremsdrucks eine Wegverstellung vorzunehmen und dann eine Anpassung hinsichtlich der Federkonstanten der Regelfeder durchzuführen, sondern es wird davon ausgegangen, daß eine bestimmte, konkrete Regelfeder mit ihrer damit feststehenden Federkonstanten als Ausgangspunkt der Betrachtungen dient. Es ergeben sich sodann eindeutige Verstell- und Einstellverhältnisse, indem die Wegver- bzw. -einstellung des Hubes des Steuerkolbens in Abhängigkeit von der jeweiligen Balgdruckdifferenz zwischen Leerlast und Vollast gewählt wird. Dies richtet sich nach der geometrischen Ausbildung der Regelfeder einerseits und der Steuerfläche des Steuerkolbens sowie dem einwirkenden Steuerdruck andererseits. Damit ist der zu durchfahrende Weg des Steuerkolbens in einem ersten Schritt festgelegt, und zwar unabhängig davon, welchen Leerbremsdruck die Bremsanlage des betreffenden Fahrzeugs in der nichtbeladenen Stellung erfordert. In einem zweiten Einstellschritt wird die Schräglage der schrägen Gleitfläche des Verstellglieds eingestellt bzw. qewählt, was durch Verstellung der Schräglage in eine andere Winkellage möglich ist. Es ist wichtig, bei dieser Verstellung einen Punkt der Gleitkurve konstantzuhalten, nämlich den Punkt, der der Vollaststellung des beladenen Fahrzeugs zugeordnet ist und bei dem der Bremskraftregler ohne Untersetzung den Bremsdruck im Verhältnis 1:1 zum Steuerdruck aussteuert. Dieser Punkt wird auch hinsichtlich der vorangehend beschriebenen Wegeinstellung konstantgehalten, d. h. sämtliche einstellbaren Hübe des Steuerkolbens enden an diesem einen Punkt bei der Einstellung 1:1. Umgekehrt erfolgt somit nach und bei der Einstellung des Leerbremsdrucks keine Veränderung des Wegs bzw. des Hubes des Steuerkolbens. Als dritte Verstellung ist es dann nur noch erforderlich, die Vorspannung der Regelfeder so einzustellen, daß bereits bei einer geringfügigen Steuerdruckerhöhung zu Beginn des Beladens eines leeren Fahrzeugs der Steuerkolben bereits eine Bewegung im Sinne eines Teilhubs ausführt. Damit werden eindeutige und überschaubare Verhältnisse geschaffen, ohne daß es erforderlich wäre, die Federkonstante der Regelfeder zu verändern. Die Einstellung des Bremskraftreglers auf den jeweiligen Anwendungsfall vereinfacht sich erheblich. Es ist lediglich noch die Benutzung eines einzigen Nomogramms bzw. einer einzige Tabelle erforderlich, aus der heraus gemäß der betreffenden Federkonstanten der Regelfeder und der sonstigen geometrischen Bedingungen der erforderliche Weg in Abhängigkeit von der Balgdruckdifferenz ablesbar ist. Der neue Bremskraftregler weist auch den weiteren Vorteil auf, daß seine Teile für eine Ein- und Verstellung nicht demontiert werden müssen, d. h. die Funktionsfähigkeit des Bremskraftreglers bleibt während des Einstellens vorhanden und kann daher z. B. mit Meß- und Prüfgeräten während des Verstellens beobachtet werden.

Zur Einstellung und Begrenzung des Hubs des Stellkolbens mit dem Verstellglied in Abhängigkeit von der Federkonstanten der Regelfeder und der Balgdruckdifferenz sowie unabhängig von der Einstellung des Leerbremsdrucks kann eine druckdichte, konterbare Stellschraube vorgesehen sein. Während die im Stand der Technik bekannte Stellschraube an dieser Stelle bei ihrer Verstellung zur Verstellung des Leerbremsdrucks führt, wobei zwangsweise ein Hub mit eingestellt wird, zu dem dann wiederum die Federkonstante der Regelfeder angepaßt werden muß, hat die neue Stellschraube eine davon abweichende Funktion. Diese erste Stellschraube, mit der der Beginn des Hubes aus der Leerlaststellung heraus einstellbar ist, kann auch gänzlich in Fortfall kommen, wenn die der Leerlaststellung entsprechende Stellung des Stellkolbens nicht durch den durch die Stellschraube verkörperten Anschlag gesichertwird, sondern eineschwimmende Stellung des Stellkolbens ausgenutzt wird, die sich durch das Einwirken des Steuerdrucks bei Leerlaststellung auf die Wirkfläche des Steuerkolbens einerseits und der Kraft der Regelfeder andererseits ergibt. Diese erste Stellschraube kann auch noch in davon abweichender Anwendung benutzt werden, beispielsweise, um einen Nothub einzustellen, der etwa einer halbbeladenen Stellung zugeordnet ist und der dann eingestellt wird, wenn der Steuerdruck infolge eines Defekts in Fortfall kommt.

Zur Einstellung des Leerbremsdrucks unabhängig von der Balgdruckdifferenz ist auf dem Stellkolben eine Stelleinrichtung vorgesehen, die eine weitere Stellschraube aufweist. Hier ergeben sich für den Fachmann eine große Vielzahl von Realisierungsmöglichkeiten. Die Stellschraube ist mit ihrer Achse parallel zur Achse des Stellkolbens vorgesehen, wobei sie auf einem Fortsatz des Stellkolbens drehbar gelagert sein und über ihr Gewinde einen Gleitstein führ en kann, der einen Hebel des Verstellglieds an zweiter Stelle, nämlich neben seiner Achse, abstützt. Es ist auch möglich, über die weitere Stellschraube den Hebel direkt abzustützen. Die weitere Stellschraube kann auch in Form eines Gewinderings ausgebildet sein, der auf einem den Stellkolben umgebenden Gewinde aufschraubbar ist.

Zur Einstellung der Vorspannung der Regelfeder unabhängig von der Federkonstanten kann eine dritte Stellschraube vorgesehen sein. Diese dritte Stellschraube dient bewußt nicht der Veränderung der Federkonstanten der Regelfeder, sondern allein der Verstellung der Vorspannung der Regelfeder. Damit ist es möglich, die Regelfeder gleichsam axial zu verschieben und in der Abgabe ihrer Kraft auf den Stellkolben so einzustellen, daß der Steuerkolben aus der Leerlaststellung heraus bei sich erhöhendem Steuerdruck sogleich eine Bewegung im Sinne eines Teilhubs ausführt.

In Zuordnung zu der Achse der schrägen Gleitfläche des Verstellglieds oder zu dem gemeinsamen Punkt unterschiedlich schräger Gleitflächen kann ein Anschlag zur örtlichen Fixierung der Vollaststellung vorgesehen sein. Dieser Anschlag ist zweckmäßig und begrenzt den Hub des Stellkolbens in der Vollaststellung immer auf eine übereinstimmende Stellung, und zwar völlig unabhängig von den verschiedenen Einstellmaßnahmen. Die Vollaststellung mit der Übersetzung zwischen ein- und ausgesteuertem Druck von 1:1 ist damit immerfestgelegt. Die Anwendung der Erfindung ist unabhängig davon, ob ein Bremskraftregler in durchsteuernder Bauart oder in Relaisbauart verwirklicht wird. Bei beiden Bauarten läßt sich die vorliegende Erfindung anwenden.

Der Anschlag kann gehäuseseitig oder auch an dem Verstellglied angeordnet sein. Mit ihm wird in beiden Fällen der mögliche Hub des Steuerkolbens in der Endlage begrenzt.

Die dritte Stellschraube zur Einstellung der Vorspannung der Regelfeder kann zweckmäßig im Steuerkolben angeordnet sein, wobei sich die Regelfeder andererseits am Gehäuse abstützt. Da die Regelfeder meist eine relativ große axiale Länge aufweisen muß, vergrößert bei dieser Bauart die Anordnung der dritten Stellschraube die Außenabmessungen des Bremskraftreglers nicht, weil die Stellschraube gleichsam innerhalb der Regelfeder angeordnet ist. Gleichzeitig ist damit die Stellschraube auch geschützt untergebracht. Die dritte Stellschraube wie auch die anderen beiden Stellschrauben können damit am Bremskraftregler so angeordnet und untergebracht sein, daß ihre verstellende Betätigung erst nach Abnahme eines Deckeloder Verschlußteils oder auch einer Schutzkappe möglich wird. Diese Maßnahmen zielen auf die Verhinderung einer unbefugten Verstellung hin.

Der Stellkolben kann radiale Fortsätze aufweisen, an denen das Stellglied mit der Achse schwenkbar gelagert ist. Das Stellglied ist in diesem Fall als Hebelplatte ausgebildet und einerseits an der Achse und andererseits an der zweiten Stellschraube oder einem damit in Verbindung stehenden Teil abgestützt.

Die Erfindung wird anhand bevorzugter Ausführungsbeispiele weiter erläutert und beschrieben. Es zeigen:

Figur 1    eine geschnittene Darstellung eines Bremskraftreglers in einer ersten Ausführungsform in drucklosem Zustand,

Figur 2    die Relativlage der Teile des Bremskraftreglers gemäß Figur 1 nach abgeschlossener Einstellung auf eine Balgdruckdifferenz mit unabhängiger Einstellung eines Leerbremsdrucks, und

Figur 3    die wesentlichen Teile einer zweiten Ausführungsform des Bremskraftreglers.

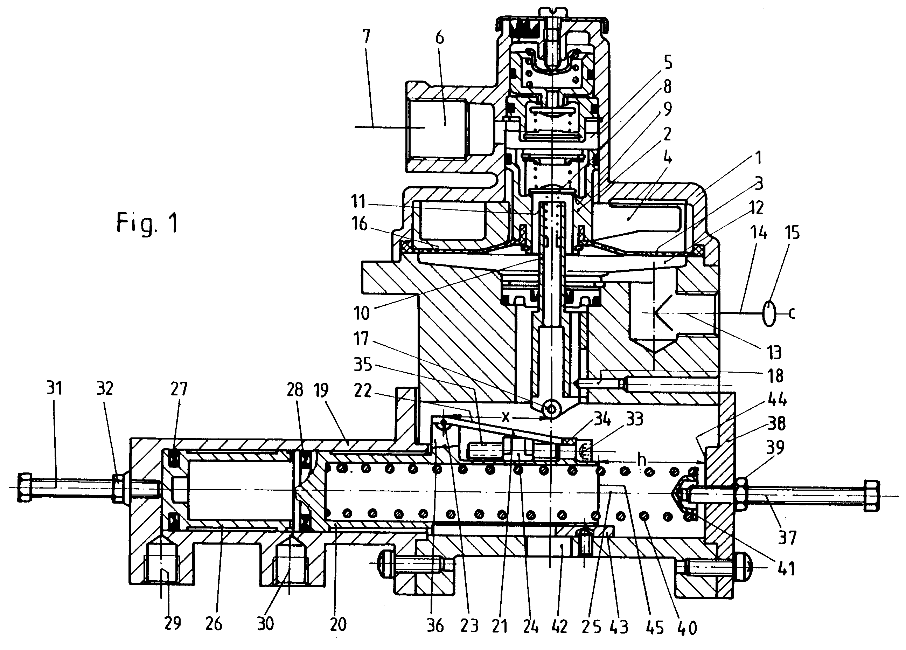

In Figur 1 ist der automatisch lastabhängige Bremskraftregler in drucklosem Zustand dargestellt. Ein solcher Bremskraftregler ist hinsichtlich seiner wesentlichen Teile und seines Aufbaus bekannt, weshalb er im Folgenden nur soweit erläutert wird, wie es für das Verständnis der Erfindung erforderlich ist. In einem Gehäuse 1 ist ein Steuerkolben 2 gleitend und dichtend geführt, der einerseits eine im Gehäuse eingespannte Membran 3 und einen Sternkörper 4 trägt. Oberhalb des Steuerkolbens 2 ist eine Steuerkammer 5 gebildet, die in dauernder Verbindung zu einem Anschluß 6 steht, an den eine Steuerleitung 7 angeschlossen wird. Der Steuerkolben 2 ist hohl ausgebildet. In ihm ist ein Doppelventilkörper 8 in der gezeigten Weise federnd aufgehängt, der mit einem eingezogenen Rand 9 ein Einlaßventil 8, 9 bildet. In die Durchbrechung des Steuerkolbens 2 ragt von unten eine Steuerstange 10 ein, die hohl ausgebildet ist und deren oberer Rand 11 in Verbindung mit dem Doppelventilkörper 8 ein Auslaßventil 8, 11 bildet. Der Steuerkolben 2 teilt mit seiner Membran 3 im Gehäuse 1 eine Bremskammer 12 ab, die zu einem Anschluß 13 führt, an welchen über eine Leitung 14 der oder die Bremszylinder 15 angeschlossen sind. Dem Steuerkolben 2 mit seinem Sternkörper 4 ist ein im Gehäuse gelagerter Fächereinsatz 16 zugeordnet, so daß auf diese Art und Weise unterschiedliche Flächenverhältnisse, wie sie zur Realisierung unterschiedlicher Übersetzungsverhältnisse zwischen dem über die Steuerleitung 7 eingesteuerten Druck und dem über die Leitung 14 ausgesteuerten Bremsdruck erforderlich sind, eingestellt werden können. Es ist ersichtlich, daß die relative Höhe der Steuerstange 10 im Gehäuse 1 und damit die Höhe des Rands 11 des Auslaßventils 8, 11 das Übersetzungsverhältnis bestimmt.

Die Steuerstange 10 besitzt an ihrem unteren Ende eine Rolle 17 und ist mit Hilfe eines Bolzens 18 verdrehgesichert gelagert.

In einem Gehäuseteil 19 des Bremskraftreglers ist ein Stellkolben 20 gleitend und dichtend geführt, der ein Verstellglied 21 trägt, welches der Steuerstange 10 zugeordnet ist. Das Verstellglied 21 weist der Rolle 17 zugekehrt eine schräge Gleitfläche 22 auf, an der sich die Rolle 17 bei Betätigung des Stellkolbens abwälzt und insoweit die jeweilige Relativlage der Steuerstange 10 im Gehäuse 1 bestimmt. Das Verstellglied 21 ist um eine Achse 23 an dem Stellkolben 20 schwenkbar gelagert und wird über einen Gleitstein 24 abgestützt, der parallel zur Achse 25 des Stellkolbens 20 verschieb- und einstellbar angeordnet ist, so daß durch seine Relativlage zu der Achse 23 die Schräglage des Verstellglieds 21 und damit auch der Gleitfläche 22 festgelegt wird.

Der Stellkolben 20 ist zweikreisig ansteuerbar. Zu diesem Zweck ist ein weiterer Kolben 26 vor dem Stellkolben 20 gelagert. Der Kolben 26 ist mit einer Dichtung 27 und der Stellkolben 20 mit einer Dichtung 28 versehen. An einem Anschluß 29 ist ein erster Steuerkreis und an einem Anschluß 30 ein zweiter Steuerkreis angeschlossen, so daß der Stellkolben 20 bei Einsteuerung von Steuerdruck über einen oder beide Anschlüsse 29 und 30 mit der einfachen Kraft belastet wird. Im Gehäuseteil 19 ist eine erste Stellschraube 31 angeordnet, die druckdicht das Gehäuseteil 19 durchdringt und dem Kolben 26 sowie dem Stellkolben 20 zugeordnet ist. Eine Kontermutter 32 dient der Fixierung der jeweils eingestellten Stellung der Stellschraube 31. Eine zweite Stellschraube 33 ist an einem Fortsatz 34 des Stellkolbens 20 drehbar, aber axial gesichert, gelagert. Sie durchdringt mit ihrem Gewindeschaft 35 den Gleitstein 24 in einem entsprechenden Innengewinde, so daß durch Verdrehen der Stellschraube 33 der Gleitstein 24 parallel zur Achse 25 an dem Stellkolben 20 hin- und herbewegt und somit ver- und eingestellt werden kann. Neben dem Fortsatz 34 weist der Stellkolben 20 auch einen Fortsatz 36 auf, der die Achse 23 des Verstellglieds 21 trägt.

Eine dritte Stellschraube 37 ist in einem Deckel 38 an dem Gehäuseteil 19 gelagert. Der Stellschraube 37 ist eine Kontermutter 39 zugeordnet. Eine Regelfeder 40 stützt sich mit ihrem einen Ende am Stellkolben 20 und mit ihrem anderen Ende über einen Federteller 41 an der dritten Stellschraube 37 ab.

Am Gehäuseteil 19 ist eine Auslaßöffnung 42 zu Entlüftungszwecken über das Auslaßventil 8, 11 vorgesehen. Ein Lagerstück 43, welches im Gehäuseteil 19 ortsfest gelagert ist, stützt den Stellkolben 20 gegen Verkippkräfte ab.

Der Deckel 38 bildet einen Anschlag 44 zur Begrenzung des maximalen Hubs h, den der Stellkolben 20 im Gehäuseteil 19 zurücklegen kann, bis sein vorderer Rand 45 an dem Anschlag 44 anschlägt. Die Achse 23 ist derart an dem Stellkolben 20 angeordnet, daß ihre Entfernung x von der Rolle 17 - parallel zur Achse 25 gemessen -, dem maximalen Hub h entspricht. dabei ist eine entsprechende Formgebung des Verstellglieds 21 unterstellt, d. h. dessen schräge Gleitfläche 22 erstreckt sich bis oberhalb der Achse 23.

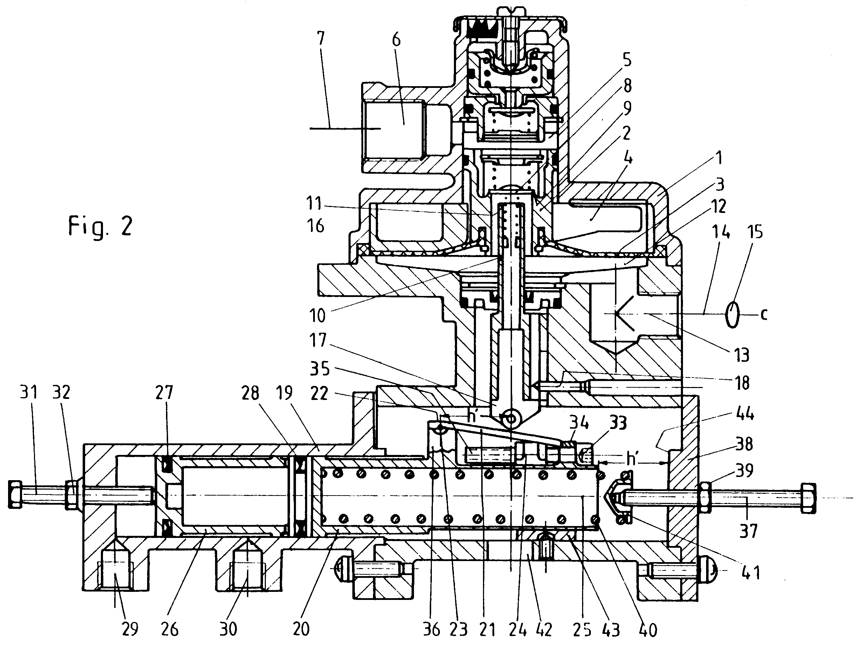

Figur 2 zeigt den Bremskraftregler gemäß Figur 1 in einer auf einen Anwendungsfall eingestellten Stellung. Die Einstellung wird, ausgehend von der Relativlage der Teile gemäß Figur 1, auf folgende Art und Weise erreicht:

Die Erfindung geht von dem Bewußtsein aus, daß die Regelfeder 40 nicht ausgetauscht und auch nicht in ihrer Federkonstanten verändert werden soll, sondern die Federkonstante der Regelfeder 40 wird als konstante, vorgegebene Größe berücksichtigt. Damit ist das Verhältnis von Kraft zu Weg, also zu Hub, an der Regelfeder 40 konstant. In der Verbindung mit der ebenfalls konstruktiv festliegenden Größe der Wirkflächen des Stellkolbens 20 und des Kolbens 26 ergibt sich damit eine eindeutige Zuordnung zwischen Weg und Kraft. Da an den Anschlüssen 29 und 30 der jeweilige Balgdruck der hydraulischen oder pneumatischen Federung des Fahrzeugs einwirkt, ergibt sich für jede Balgdruckdifferenz ein Resthub h' (Figur 2), also ein Weg, den der Stellkolben 20 zwischen der Leerlaststellung (Fahrzeug unbeladen) und der Vollaststellung (Fahrzeug voll beladen) durchlaufen muß.

Für jede konstruktive Ausführungsform entsprechend der Reglerfeder 40 und den Wirkflächen der Kolben 20, 26 ergibt sich somit eine einzige Tabelle oder ein einziges Diagramm der individuellen Resthübe h' in Abhängigkeit von Balgdruckdifferenz. Da die Balgdrücke bei Vollast und Leerlast für den Anwendungsfall vorgegeben sind, kann in einfacher Weise die Balgdruckdifferenz berechnet und der erforderliche individuelle Resthub h' oder auch der Verstellweg y' der ersten Stellschraube 31 ermittelt bzw. abgelesen werden. Dabei gilt die Beziehung

$$h' = h - y'$$

oder

$$h' = x - y',$$

so daß mit dieser ersten Einstellung an der Stellschraube 31 auch die axial gemessene Entfernung zwischen der Rolle 17 und der Achse 23 auf den individuellen Resthub h' eingestellt wird. Es wird ausdrücklich darauf hingewiesen, daß bei gleicher Balgdruckdifferenz, für verschiedene Anwendungsfälle, ein identischer, individueller Resthub h' resultiert. Wenn der Leerbalgdruck z. B. 3 bar und der Vollastbalgdruck 6 bar bei einem ersten Anwendungsbeispiel beträgt, ergibt sich ein Resthub hin mm in genau gleicher Größe wie bei einem zweiten Anwendungsfall, bei welchem der Leerbalgdruck 2 bar und der Vollastbalgdruck 5 bar beträgt.

Im jeweiligen Anwendungsfall ist dann noch vorgeschrieben, welcher Bremsdruck im Bremszylinder 15 in der Leerlaststellung erforderlich ist bzw. eingestellt werden muß. Zu diesem Zweck wird die zweite Stellschraube 33 betätigt. Durch Verschieben des Gleitsteins 24 ändert sich die Schräglage des Verstellglieds 21 und damit der Gleitfläche 22 um die Achse 23. Durch Anschluß eines Manometers an der Leitung 14 kann unmittelbar während des Verdrehens der zweiten Stellschraube 33 dieser gewünschte und einzustellende Bremsdruck abgelesen werden.

Nachfolgend als dritte Einstellung wird die dritte Stellschraube 37 so verdreht, daß sichergestellt ist, daß der Stellkolben 20 und der Kolben 26 (bei zweikreisiger Ansteuerung) bei Leerlastbalgdruck an der Stellschraube 31 anliegen, wobei die Kraft der Regelfeder 40 so durch die dritte Stellschraube 37 eingestellt wird, daß der Gleichgewichtszustand errreicht ist, also die Stellung gemäß Figur 2 im Leerlastfall bei einwirkendem Leerbalgdruck beibehalten ist, jede Druckerhöhung an den Anschlüssen 29 und 30 jedoch dazu führt, daß sich der Stellkolben 20 hinsichtlich seines individuellen Resthubs h' zu bewegen beginnt. Wenn an den Anschlüssen 29 und 30 der Vollastbalgdruck, also der Balgdruck bei voller Beladung des Fahrzeugs, einwirkt, muß notwendigerweise der gesamte individuelle Resthub h' durchfahren sein, so daß der Rand 45 an dem Anschlag 44 zur Anlage kommt und sich die Rolle 17 oberhalb der Achse 23 befindet. In dieser Vollaststellung erreicht die Steuerstange 10 ihre relativ höchste Lage, also die Einstellung von 1:1 im Übersetzungsverhältnis, so daß bei der dargestellten durchsteuernden Bauart in dieser Stellung das Einlaßventil 8, 9 dauernd geöffnet ist, so daß der über die Steuerleitung 7 eingesteuerte Druck gleich dem Druck ist, der über die Leitung 14 in die Bremszylinder 15 ausgesteuert wird. Es ist erkennbar, daß sich bei einer Veränderung der Schräglage der Gleitfläche 22 des Verstellglieds 21 sämtliche Punkte relativ zu der Rolle 17 ändern, mit Ausnahme des letztes Punkts oberhalb der Achse 23, der der Vollaststellung 1:1 zugeordnet ist.

Es versteht sich anhand der vorgehenden Ausführungen, daß z. B. beim Austausch von Bremszylindern 15 an einem Fahrzeug und bei beibehaltener Balgdruckdifferenz ein vorher auf dieses Fahrzeug eingestellter Bremskraftregler dann nur noch an der zweiten Stellschraube 33 eingestellt werden muß, wenn die neuen Bremszylinder 15 einen anderen Leerbremsdruck erfordern.

Die Anordnung der ersten Stellschraube 31 hat den Vorteil, daß die Leerlaststellung des Stellkolbens 20 gegen die als Anschlag wirkende Stellschraube 31 verläßlich einstellbar ist. Wenn sich jedoch die Reibungsverhältnisse und sonstigen störenden Einflüsse innerhalb der Verstelleinrichtung genauer und besser einhalten lassen, kann grundsätzlich auf die Anordnung der Stellschraube 31 auch verzichtet werden. Die Leerlaststellung ist dann eine schwimmende Stellung, aus der heraus gearbeitet wird, d. h. die Leerlaststellung wird durch das Kräftegleichgewicht des am Stellkolben 20 einwirkenden Leerbalgdrucks und der Kraft der Regelfeder 40 festgelegt. Hierzu muß freilich die Vorspannung der Regelfeder 40 mit Hilfe der dritten Stellschraube 37 eingestellt werden. Damit bestimmt die Regelfeder 40 (mit und ohne Anordnung der ersten Stellschraube 31) den individuellen Resthub h' aufgrund ihrer als konstant vorausgesetzten Federkonstanten. Es wird auch erkennbar, daß an sich der Anschlag 44 ebenfalls entbehrlich ist, denn die Zusammendrückung der Regelfeder 40 geschieht in genau der Weise, daß der individuelle Resthub h' zurückgelegt wird. Freilich muß die Vorspannung der Regelfeder 40 entsprechend diesem individuellen Resthub h' eingestellt werden. Als zweiter Verstellschritt wird dann der Leerbremsdruck an der zweiten Stellschraube 33 eingestellt. Auch bei dieser Einstellung, bei der die Stellschraube 31 grundsätzlich fehlen kann, schadet ihre Anordnung an sich nichts, auch dann nicht, wenn die Stellschraube 31 nach der Einstellung des individuellen Resthubs h' wieder in ihre in Figur 1 dargestellte Ausgangslage zurückgedreht wird, so daß sie funktionsmäßig an sich nicht mehr vorhanden ist.

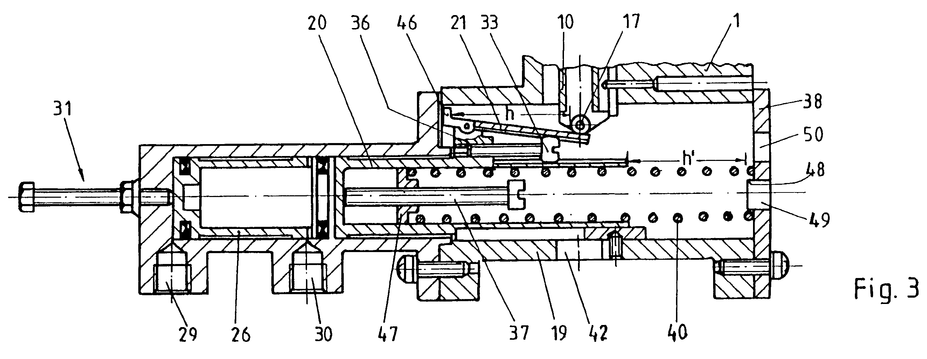

Figur 3 zeigt eine weitere Ausführungsmöglichkeit des Bremskraftreglers hinsichtlich seiner hier interessierenden Teile. Die zweite Stellschraube 33 bildet mit ihrem Kopf gleichzeitig den Gleitstein 24 und stützt das Verstellglied 21 damit von unten ab. In diesem Fall durchsetzt die zweite Stellschraube 33 den Fortsatz 36 in einem entsprechenden Gewinde. Der Anschlag 44 befindet sich jetzt nicht mehr am Deckel 38, sondern in Form einer Nase 46 an dem Verstellglied 21, so daß sich hier der maximale Hub h' parallel zur Achse 25 zwischen der Nase 46 und der Rolle 17 ergibt. Die dritte Stellschraube 37 zur Einstellung der Vorspannung der Regelfeder 40 ist nicht außen an dem Deckel 38, sondern im Innern des Stellkolbens 20 geschützt untergebracht. Die Regelfeder 40 wird hier über einen Federteller 47 abgestützt, während sie andererseits an einem Kragen 48 des Deckels 38 geführt gelagert ist. Im Deckel 38 ist ein erstes Loch 49 für die Zugänglichkeit der dritten Stellschraube 37 und ein zweites Loch 50 für die Zugänglichkeit der zweiten Stellschraube 33 vorgesehen. In den beschriebenen Fällen ist der Stellkolben 20 verdrehgesichert gelagert, damit das Verstellglied 21 seine relative Lage zu der Rolle 17 und damit der Steuerstange 10 immer beibehält.

**Bezugszeichenliste:**

| | |
|---|---|
| 1 | = Gehäuse |
| 2 | = Steuerkolben |
| 3 | = Membran |
| 4 | = Sternkörper |
| 5 | = Steuerkammer |
| 6 | = Anschluß |
| 7 | = Steuerleitung |
| 8 | = Doppelventilkörper |
| 9 | = Rand |
| 10 | = Steuerstange |
| 11 | = Rand |
| 12 | = Bremskammer |
| 13 | = Anschluß |
| 14 | = Leitung |

| 15 | = Bremszylinder |
| 16 | = Fächereinsatz |
| 17 | = Rolle |
| 18 | = Bolzen |
| 19 | = Gehäuseteil |
| 20 | = Stellkolben |
| 21 | = Verstellglied |
| 22 | = Gleitfläche |
| 23 | = Achse |
| 24 | = Gleitstein |
| 25 | = Achse |
| 26 | = Kolben |
| 27 | = Dichtung |
| 28 | = Dichtung |
| 29 | = Anschluß |
| 30 | = Anschluß |
| 31 | = erste Stellschraube |
| 32 | = Kontermutter |
| 33 | = zweite Stellschraube |
| 34 | = Fortsatz |
| 35 | = Gewindeschaft |
| 36 | = Fortsatz |
| 37 | = dritte Stellschraube |
| 38 | = Deckel |
| 39 | = Kontermutter |
| 40 | = Regelfeder |
| 41 | = Federteller |
| 42 | = Auslaßöffnung |
| 43 | = Lagerstück |
| 44 | = Anschlag |
| 45 | = Rand |
| 46 | = Nase |
| 47 | = Federteller |
| 48 | = KRagen |
| 49 | = Loch |
| 50 | = Loch |

**Patentansprüche**

1. Automatisch lastabhängiger Bremskraftregler für druckmittelbetätigte Bremsanlagen in pneumatisch oder hydraulisch gefederten Fahrzeugen, mit einem vom lastabhängigen Druck gesteuerten und sich auf einer Regelfeder (40), die in ihrer Vorspannung einstellbar ist, abstützenden Stellkolben (20), der ein die Steuerstange (10) des Regelteils des Bremskraftreglers steuerndes Verstellglied (21) mit einer schrägen Gleitfläche (22) aufweist, dadurch gekennzeichnet, daß die Schräglage der schrägen Gleitfläche (22) des Verstellglieds (21) über eine aufdem Stellkolben (20) vorgesehene Stelleinrichtung im Sinne einer Schwenkbewegung um eine durch die Vollaststellung festgelegte Achse (23) veränderlich einstellbar ist, wozu eine Stellschraube (33) mit ihrer Achse parallel zur Achse (25) des Stellkolbens (20) und außerhalb der sich im Stellkolben (20) abstützenden Regelfeder (40) angeordnet ist.

2. Bremskraftregler nach Anspruch 1, dadurch gekennzeichnet, daß eine Stellschraube (37) zur Einstellung des Leerbremsdrucks unabhängig vom Balgdifferenzdruck im Stellkolben (20) angeordnet ist und die Regelfeder (40) andererseits am Gehäuse abgestützt ist.

3. Bremskraftregler nach Anspruch 1, dadurch gekennzeichnet, daß der Stellkolben (20) radiale Fortsätze (36) aufweist, an denen das Stellglied (21) mit der Achse (23) schwenkbar gelagert ist.

**Claims**

1. Automatically load-dependent brake-force regulator for pressure-actuated brake systems in vehicles having pneumatic or hydraulic suspension, with an actuating piston (20) which is controlled by the load-dependent pressure and is supported on a regulating spring (40) of adjustable prestress and which has an adjusting member (21) controlling the control rod (10) of the regulating part of the brake-force regulator and possessing an oblique sliding face (22), characterised in that the oblique position of the oblique sliding face (22) of the adjusting member (21) can be set variably, via an actuating device provided on the actuating piston (20), with the effect of a pivoting movement about an axle (23) determined by the full-load position, a setscrew (33) to serve this purpose being arranged with its axis parallel to the axis (25) of the actuating piston (20) and outside the regulating spring (40) supported in the actuating piston (20).

2. Brake-force regulator according to Claim 1, characterised in that a setscrew (37) is arranged for setting the no-load brake pressure independently of the bellows-pressure difference in the actuating piston (20), and the regulating spring (40) is supported, on the other hand, on the housing.

3. Brake-force regulator according to Claim 1, characterised in that the actuating piston (20) has radial extensions (36), on which the actuating member (21) is mounted pivotably by means of the axle (23).

**Revendications**

1. Régulateur de force de freinage agissant automatiquement en fonction de la charge pour des systèmes de freinage actionnés par un fluide sous pression sur des véhicules à suspension pneumatique ou hydraulique, avec un piston de réglage (20) commandé par la pression qui dépend de la charge et prenant appui sur un ressort de régulation (40) dont la précontrainte est réglable, ce piston présentant un organe correcteur de réglage (21) commandant la tige de commande (10) de l'organe de régulation du régulateur de force de freinage, au moyen d'une surface de glissement oblique (22), **caractérisé** en ce que l'obliquité de la surface de glissement oblique (22) de l'organe correcteur de réglage (21) est réglable de façon variable au moyen d'un dispositif de réglage prévu sur le piston de réglage (20) dans le sens d'un mouvement de pivotement autour d'un axe (23) déterminé par la position de pleine charge, une vis de réglage (33) ayant un axe parallèle à l'axe (25) du piston de réglage (20) étant disposée en dehors du ressort de régulation (40) prenant appui dans le piston de réglage (20).

2.  Régulateur de force de freinage selon la revendication 1, caractérisé en ce qu'une vis de réglage (37) pour le réglage de la pression de freinage à vide, indépendamment de la pression différentielle des soufflets, est disposée dans le piston de réglage (20), tandis que le ressort de régulation (40) prend appui d'autre part sur le boitier.

3.  Régulateur de force de freinage selon la revendication 1, caractérisé en ce que le piston de réglage (20) présente des appendices radiaux (36) sur lesquels l'organe de réglage (21) est monté pivotant autour de l'axe (23).

Fig. 1

Fig. 2

Fig. 3